# EUROPEAN PATENT APPLICATION

(11) **EP 4 815 094 A1**
(43) Date of publication of application: **30.09.2026**
(21) Application number: 26165894.2
(22) Date of filing: 18.03.2026
(51) Int. Cl.: H01M 10/0587, H01M 4/62, H01M 10/052, H01M 10/0525, H01M 10/0567, H01M 10/0568, H01M 4/02

(54) **BATTERY AND ELECTRIC APPARATUS**

(30) Priority: 18.03.2025 CN 202510319242
(71) Applicant: Ningde Amperex Technology Ltd., Ningde City, Fujian Province 352100 (CN)
(72) Inventor: LIU, Wei, Ningde City, Fujian Province 352100 (CN)
(74) Representative: Icosa

(57) **Abstract**

An electrode assembly includes a separator and multiple electrode plates. The electrode plates and the separator are wound multiple turns to form an electrode body. The electrode body includes a flat portion and corner portions provided at two opposite ends of the flat portion. The electrode plate has multiple first protrusions corresponding to the corner portions. Along a thickness direction of the electrode plate, a height of the first protrusion is Hm (µm), where Hm satisfies: 20 ≤ Hm ≤ 80. The electrolyte includes lithium difluorophosphate. Based on a total weight of the electrolyte, a weight percentage of lithium difluorophosphate is E (%), where E satisfies: 0.01 ≤ E ≤ 3.00.

## Description

### TECHNICAL FIELD

This application relates to the field of battery technology, and more particularly to a battery and an electric apparatus.

### BACKGROUND

Currently, a considerable number of electrode assemblies for secondary batteries adopt a wound structure. For a wound electrode assembly, hot pressing is required after winding, and the electrode assembly needs to be fixed after being loaded into the outer package. In this case, the electrolyte cannot easily enter the interior of the wound electrode assembly, and abnormal conditions such as insufficient electrolyte and poor electrolyte wetting are likely to occur, which ultimately leads to deterioration of the electrode plate interface of the electrode assembly. This affects battery cycling performance, and even causes lithium precipitation, compromising battery safety.

### SUMMARY

The inventors have found that extrusion between layers of an electrode assembly leads to insufficient electrolyte and poor wetting between the layers of the electrode assembly, resulting in interface deterioration.

Some embodiments of this application provide a battery and an electric apparatus, so as to alleviate poor electrolyte wetting.

According to a first aspect, some embodiments of this application provide a battery including an outer package, an electrode assembly, and an electrolyte, where the electrode assembly is disposed in an internal space of the outer package, and the electrolyte fills the internal space of the outer package;
the electrode assembly includes a separator and multiple electrode plates, the separator is disposed between two electrode plates of opposite polarities, and the electrode plates and the separator are wound multiple turns to form an electrode body, the electrode body including a flat portion and corner portions disposed at two opposite ends of the flat portion, where the corner portion of the electrode plate is provided with multiple first protrusions, and along a thickness direction of the electrode plate, a height of the first protrusion is Hm (µm), where Hm satisfies: 20 ≤ Hm ≤ 80; and
the electrolyte includes lithium difluorophosphate, and based on a total weight of the electrolyte, a weight percentage of the lithium difluorophosphate is E (%), where E satisfies: 0.01 ≤ E ≤ 3.00.

Based on the above embodiments, by matching the content E of lithium difluorophosphate with the height Hm of the first protrusion, the solid electrolyte interphase film formed by lithium difluorophosphate at the electrode plate interface, has a good improvement effect on lithium ion transport at the first protrusions, thereby alleviating electrode plate interface problems while reducing the direct current impedance of the battery at 20%SOC.

In some embodiments, the battery satisfies: 0.01 ≤ E ≤ 1.8, and 20 ≤ Hm ≤ 40.

In some embodiments, the electrolyte further includes ethylene glycol bis(2-cyanoethyl) ether, and based on the total weight of the electrolyte, a weight percentage of the ethylene glycol bis(2-cyanoethyl) ether is F (%), where F satisfies: 0.1 ≤ F ≤ 2.5.

Based on the above embodiments, ethylene glycol bis(2-cyanoethyl) ether can assist lithium difluorophosphate in forming a stable solid electrolyte interphase film at the positive electrode plate interface, alleviating the problem of formation of uneven solid electrolyte interphase films caused by the presence of protrusions. Moreover, the solid electrolyte interphase film can also inhibit the occurrence of side reactions at the electrode plate interface at low temperatures, improving low-temperature discharge performance and intermittent cycling performance of the battery while reducing the gas production during long cycles of the battery.

In some embodiments, the battery satisfies: 0.1 ≤ F ≤ 1.8, and 20 ≤ Hm ≤ 60.

In some embodiments, the battery satisfies: 0.3 ≤ F ≤ 1.2, and 20 ≤ Hm ≤ 40.

In some embodiments, a viscosity of the electrolyte is A (mpa.s), where the battery satisfies: 4.0 ≤ A ≤ 7.0.

Based on the above embodiments, by matching the viscosity A of the electrolyte with the height of the first protrusion, an appropriate spacing is maintained between the electrode plate and the separator. This helps improve the wetting speed of the electrolyte, and facilitates selection of the content of lithium difluorophosphate within an appropriate range, thereby enabling lithium difluorophosphate to form a solid electrolyte interphase film of an appropriate thickness at the positive electrode plate interface.

In some embodiments, the battery satisfies: 5 ≤ A ≤ 6.5, and 20 ≤ Hm ≤ 40.

In some embodiments, the electrolyte further includes a lithium salt, where the lithium salt is selected from at least one of lithium hexafluorophosphate, lithium perchlorate, lithium difluoro(oxalato)borate, lithium bis(fluorosulfonyl)imide, or lithium tetrafluoroborate.

In some embodiments, the electrolyte further includes a lithium salt, where the lithium salt includes lithium difluoro(oxalato)borate, and based on the total weight of the electrolyte, a weight percentage of the lithium difluoro(oxalato)borate is K (%), where K satisfies: 3.0 ≤ K ≤ 10.0.

Based on the above embodiments, by adding lithium difluoro(oxalato)borate to the electrolyte, lithium difluoro(oxalato)borate can play a role in inhibiting gas production and improving hot-box performance. Moreover, it exhibits a good high-voltage stability and a wide operating temperature range, with low ion migration resistance at -20°C. On the basis of selecting the height Hm of the first protrusion to improve the wetting effect of the electrolyte into the active material layer, selecting the weight percentage K of lithium difluoro(oxalato)borate in the range of 3.0 ≤ K ≤ 10.0 can promote the application of lithium difluoro(oxalato)borate in the electrolyte.

In some embodiments, the battery satisfies: 3.0 ≤ K ≤ 8.0, and 20 ≤ Hm ≤ 60.

In some embodiments, the electrode plate has multiple second protrusions corresponding to the flat portion; along the thickness direction of the electrode plate, a height of the second protrusion is Hn (µm); a diameter of an inner surface of the first protrusion is Rm (mm), and a diameter of an inner surface of the second protrusion is Rn (mm); and the battery satisfies at least one of the following conditions:
(1) $5 \leq Hn \leq 40 ;$
(2) $1.25 \leq Hm / Hn \leq 5 ;$
(3) $0.3 \leq Rm \leq 10 ; or$
(4) $Rm = Rn .$

In some embodiments, the electrode plate includes a current collector and an active material layer disposed on a surface of the current collector, where the active material layer includes carbon nanotubes, and a length of the carbon nanotubes is L (µm), where L satisfies: 0.2 ≤ L ≤ 5.

Based on the above embodiments, the carbon nanotubes with an appropriate length enable the active material layer at the first protrusions and the second protrusions to have a good morphological stability, making it less prone to abnormal conditions such as cracks and shedding. They also improve the electronic conductivity of the electrode plate and enhance the 45°C float charging performance of the battery.

In some embodiments, a diameter of the carbon nanotubes is D1 (nm), where D1 satisfies: 5 ≤ D1 ≤ 18.

Based on the above embodiments, the carbon nanotubes with an appropriate diameter D1 achieve the effect of reducing interfacial side reactions in the electrode plate, improving cycling, and improving the hot-box performance of the battery.

According to a second aspect, some embodiments of this application provide an electric apparatus. The electric apparatus includes a housing and the foregoing battery, where the battery is disposed in an internal space of the housing.

Based on the battery and electric apparatus according to some embodiments of this application, by adding lithium difluorophosphate to the electrolyte, and selecting the weight percentage E of lithium difluorophosphate to satisfy 0.01 ≤ E ≤ 3.00, lithium difluorophosphate can improve the ion mobility in the lithium salt, and form a uniform and thin solid electrolyte interphase film on the surface of the positive electrode active material layer to capture gas molecules at the electrolyte and electrode plate interface and reduce interfacial side reactions, thereby improving the fast charging performance and charge-discharge cycling performance of the battery. Additionally, by matching the content E of lithium difluorophosphate with the height Hm of the first protrusion, on the basis of improving the electrolyte wetting effect, the solid electrolyte interphase film has a good improvement effect on lithium ion transport, especially at the first protrusions, reducing the 1s direct current impedance of the battery at 20%SOC.

### BRIEF DESCRIPTION OF DRAWINGS

To describe the technical solutions in the embodiments of this application or in the prior art more clearly, the following briefly describes the accompanying drawings for describing the embodiments or the prior art. Apparently, the accompanying drawings in the following description show merely some embodiments of this application, and persons of ordinary skill in the art may still derive other embodiments from these accompanying drawings without creative efforts.
FIG. 1 is a schematic front view of an electrode plate in an unfolded state according to some embodiments of this application;
FIG. 2 is a schematic cross-sectional view of an electrode assembly according to some embodiments of this application;
FIG. 3 is a schematic partial cross-sectional view of an electrode plate having protrusions according to some embodiments of this application; and
FIG. 4 is a schematic front view of an electrode plate having end clearance regions according to some embodiments of this application.

### Reference signs:

20. electrode body; 21. flat section; 22. corner section; 100. electrode tab; 40. electrode tab assembly; 50. separator;
300. electrode plate; 311. protrusion; 301. first protrusion;
410. positive electrode plate; 420. negative electrode plate;
310. bump region; 320. electrode tab region; 330. end clearance region; 331. head clearance region; 332. tail clearance region; 341. edge clearance region;
X. length direction; Y. width direction; and Z. thickness direction.

### DETAILED DESCRIPTION

To make the objectives, technical solutions, and advantages of this application more comprehensible, the following describes this application in detail with reference to embodiments and accompanying drawings. It should be understood that the specific embodiments described herein are merely used to explain this application but are not intended to limit this application.

The inventors have found that when the electrode assembly inside a secondary battery adopts a wound structure, hot pressing is required for the electrode assembly after the electrode plates and separators of the electrode assembly are alternately stacked and wound. Internal stress exists within the electrode assembly, leading to poor electrolyte wettability. Furthermore, during charging and discharging, the electrode assembly swells, further exacerbating the interlayer compression of the electrode assembly, resulting in insufficient electrolyte and poor wetting. Ultimately, the interface at weak positions deteriorates, and even lithium precipitation occurs. To solve the above problems, it is necessary to create a gap between battery layers. Currently, the following methods are used for creating a gap: (1) Attaching adhesive tape at specific positions on the electrode plate, where the adhesive tape provides support to form a gap. This method currently improves wettability, but the presence of the adhesive tape occupies thickness, increasing the thickness of the electrode assembly and causing some loss of battery energy density. (2) Applying soluble chemical substances, where some electrolyte-soluble adhesive is evenly applied onto the electrode plate to form a gap. However, the improvement effect is limited, and there are other side effects on battery performance. (3) Thickening the separator. While the electrolyte storage capacity of the separator is enhanced and the electrolyte wetting effect is improved to some extent, this method increases the battery thickness, significantly reducing energy density.

The inventors have also found that by forming protrusions on the electrode plate, the protrusions act as support during winding, creating gaps between the electrode plate layers of the electrode assembly, thereby improving the transport capability of the electrolyte inside the electrode assembly and improving the cycling performance of the battery. Based on this, some embodiments of this application provide a battery and an electric apparatus, where protrusions of an electrode plate and an electrolyte are designed, to effectively address poor wetting of the electrolyte and mitigate interface issues of the electrode plate.

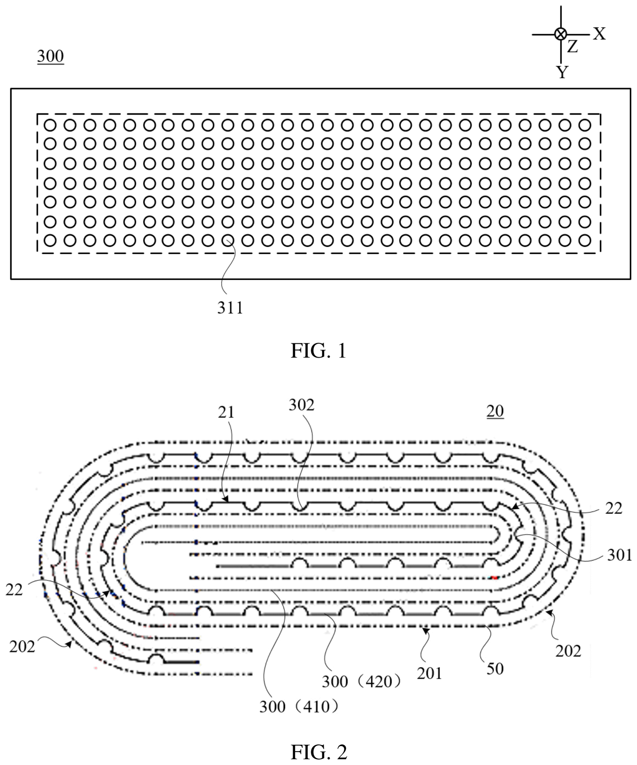

The battery provided in some embodiments of this application includes an outer package, an electrode assembly disposed in an internal space of the outer package, and an electrolyte filling the internal space of the outer package. The electrode assembly includes two electrode plates of opposite polarities and a separator. FIG. 1 is a schematic front view of an electrode plate 300 in an unfolded state according to some embodiments of this application. The electrode plate 300 has a length direction X, a width direction Y, and a thickness direction Z, which are perpendicular to each other. The two electrode plates 300 of opposite polarities in the electrode assembly have the same length direction X, width direction Y, and thickness direction Z. As shown in FIG. 2, a separator 50 is disposed between the two electrode plates 300 of opposite polarities in the thickness direction Z of the electrode plate 300. One of the two electrode plates 300 of opposite polarities is a positive electrode plate 410, and the other is a negative electrode plate 420. The separator 50 has insulating properties and is configured to separate the positive electrode plate 410 and the negative electrode plate 420 to prevent short circuits between the positive electrode plate 410 and the negative electrode plate 420.

As shown in FIG. 2, the separator 50 and the two electrode plates 300 are wound multiple turns along the length direction X of the electrode plate 300 to form an electrode body 20. The length direction X of the electrode plate 300 is a winding direction of the electrode plate 300. The electrode body 20 is flat, and the electrode body 20 includes a flat portion 201 and two corner portions 202, where the two corner portions 202 are respectively disposed at two opposite ends of the flat portion 201. Specifically, each turn of the electrode plate 300 of the electrode body 20 includes two flat sections 21 and two corner sections 22. The two flat sections 21 are arranged side by side in a direction perpendicular to a plane surface of the flat section 21, and the two corner sections 22 are arranged opposite each other along the plane of the flat section 21, that is, the two flat sections 21 and the two corner sections 22 are connected end to end in sequence. The electrode body 20 has a trailing end, the trailing end being formed by part of the flat section 21 in the outermost turn of the electrode plate 300. All the flat sections 21 stacked in a direction perpendicular to the plane surface of the flat section 21, the trailing end, and the separator 50 sandwiched between two adjacent flat sections 21 together form the flat portion 201; and all the corner sections 22 located on a same side of the flat section 21 in a direction parallel to the plane surface of the flat section 21 and the separator 50 sandwiched between two adjacent corner sections 22 together form the corner portion 202.

At least one of the positive electrode plate 410 and the negative electrode plate 420 has protrusions 311. Specifically, the electrode plate 300 includes a current collector and an active material layer. The active material layer and the current collector are stacked along the thickness direction Z of the electrode plate 300, and the active material layer is disposed on a surface of the current collector. The protrusions 311 are formed by a part of the current collector and a part of the active material layer protruding towards a same side of the electrode plate 300 along the thickness direction Z of the electrode plate 300. The electrolyte serves as a channel for ion transport, and it enters the battery through an electrolyte injection process, and driven by gravity and capillary action, continuously wets the interior of the battery. In some embodiments of this application, the protrusions 311 are disposed to provide support for the separator 50, creating a gap between the separator 50 and the electrode plate 300, thereby improving the electrolyte wetting effect.

The electrolyte typically includes various components, mainly including three categories: lithium salts, non-aqueous organic solvents, and additives. These components affect the viscosity of the electrolyte, ionic conductivity, and density of the electrolyte, thereby influencing the ion transport performance of the electrolyte. In some embodiments of this application, the electrolyte components and the protrusions 311 of the electrode plate 300 are combined, which can accelerate the electrolyte wetting process, improve the electrolyte wetting effect, and enhance the ion transport capability of the electrolyte. This improves the high-current cycling performance of the battery, improves the kinetic performance of the battery, and reduces the direct current impedance value of the battery.

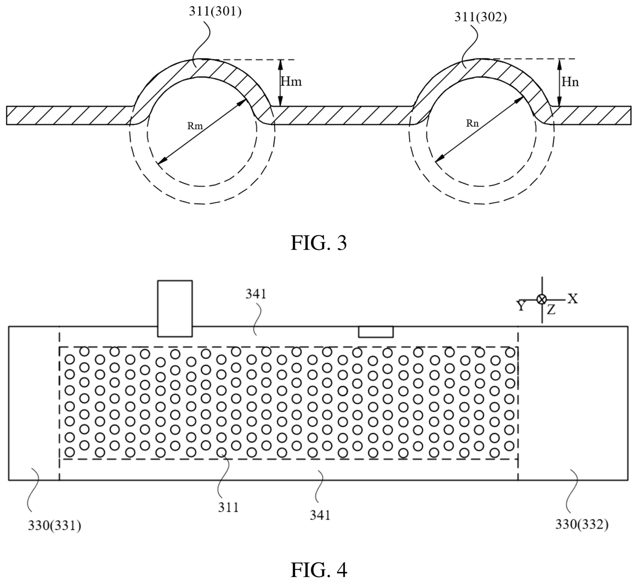

The electrode plate 300 has multiple first protrusions 301 corresponding to the corner portion 202. As shown in FIG. 3, along the thickness direction Z of the electrode plate 300, a height of the first protrusion 301 is Hm (µm), where Hm satisfies: 20 ≤ Hm ≤ 80. For example, Hm may be 20 µm, 25 µm, 34 µm, 54 µm, 66 µm, 70 µm, 80 µm, or in any range defined by two of the above values. Since the corner portion 202 is a high-incidence region where extrusion easily occurs between the layers of the electrode body 20, by providing the corner portion 202 with the first protrusions 301, stable support can be provided for the separator 50 of the corner portion 202, thereby improving the electrolyte wetting effect at the corner portion 202. The electrolyte further includes lithium difluorophosphate. Based on a total weight of the electrolyte, a weight percentage of the lithium difluorophosphate is E (%), where E satisfies: 0.01 ≤ E ≤ 3.00. For example, E may be 0.01%, 0.10%, 0.15%, 2.11%, 2.45%, 2.68%, 3.00%, or in any range defined by two of the above values. By selecting the weight percentage E of lithium difluorophosphate in the electrolyte within the above range, lithium difluorophosphate can improve the ion mobility in the lithium salt, and form a uniform and thin solid electrolyte interphase film on the surface of the positive electrode active material layer to capture gas molecules at the electrolyte and the interface of the electrode plate 300 and reduce interfacial side reactions, thereby improving the charge-discharge cycling performance of the battery. Additionally, since the first protrusion 301 is easily damaged by extrusion, and the formed solid electrolyte interphase film is relatively thin, matching the content E of lithium difluorophosphate with the height Hm of the first protrusion enables the solid electrolyte interphase film, especially at the first protrusion 301, to have a good improvement effect on lithium ion transport, reducing the 1s direct current impedance of the battery at 20%SOC (State of Charge, state of charge). When Hm is less than 20 µm or greater than 80 µm, the combined use of lithium difluorophosphate and the first protrusion 301 has limited improvement effect on the cycling performance of the battery. When the weight percentage E of lithium difluorophosphate is greater than 3.00%, high electrolyte viscosity and lithium ion enrichment at the interface of the electrode plate 300 also occur.

Preferably, the battery satisfies: 0.01 ≤ E ≤ 1.8, and 20 ≤ Hm ≤ 40. By combining the content E of lithium difluorophosphate with the height Hm of the first protrusion 301, the electrolyte can have a more appropriate viscosity and ion transport capability, thereby better improving the electrolyte wetting effect and enhancing the fast charging performance of the battery.

In some embodiments, the electrolyte further includes ethylene glycol bis(2-cyanoethyl) ether. Based on the total weight of the electrolyte, a weight percentage of ethylene glycol bis(2-cyanoethyl) ether is F (%), where F satisfies: 0.1 ≤ F ≤ 2.5. For example, F may be 0.10%, 0.15%, 0.58%, 1.22%, 1.68%, 2.23%, 2.50%, or in any range defined by two of the above values. By selecting the electrolyte also including ethylene glycol bis(2-cyanoethyl) ether, ethylene glycol bis(2-cyanoethyl) ether can assist lithium difluorophosphate in forming a stable solid electrolyte interphase film at the interface of the positive electrode plate 410, alleviating the problem of formation of uneven solid electrolyte interphase films caused by the presence of the protrusions 311. Moreover, the solid electrolyte interphase film can also inhibit the occurrence of side reactions at the electrode plate 300 interface at low temperatures, improving low-temperature discharge performance and intermittent cycling performance of the battery while reducing the gas production during long cycles of the battery.

In some embodiments, the battery satisfies: 0.1 ≤ F ≤ 1.8, and 20 ≤ Hm ≤ 60. By matching the weight percentage F of ethylene glycol bis(2-cyanoethyl) ether with the height of the first protrusion 301, while the first protrusion 301 of the corner portion 202 can have a higher height, ethylene glycol bis(2-cyanoethyl) ether can effectively improve the stability of the solid electrolyte interphase film, and improve the low-temperature high-rate discharge performance and charge-discharge cycling performance of the battery. Preferably, the battery satisfies: 0.3 ≤ F ≤ 1.2, and 20 ≤ Hm ≤ 40. In this range, ethylene glycol bis(2-cyanoethyl) ether can better alleviate the problem of uneven solid electrolyte interphase films caused by the presence of the protrusions 311, and assist lithium difluorophosphate in forming a more stable solid electrolyte interphase film at the interface of the positive electrode plate 410.

In some embodiments, a viscosity of the electrolyte is A (mpa.s), where the battery satisfies: 4.0 ≤ A ≤ 7.0, and 20 ≤ Hm ≤ 80. For example, A may be 4.0 mpa.s, 4.6 mpa.s, 5.0 mpa.s, 5.3 mpa.s, 6.8 mpa.s, 7.0 mpa.s, or in any range defined by two of the above values. By selecting the viscosity A of the electrolyte within the above range, on the basis of ensuring that the electrolyte has a good wetting effect, it is convenient to select the content of lithium difluorophosphate within an appropriate range, enabling lithium difluorophosphate to form a solid electrolyte interphase film of an appropriate thickness at the interface of the positive electrode plate 410. By matching the viscosity A of the electrolyte with the height of the first protrusion 301, an appropriate spacing is maintained between the electrode plate 300 and the separator 50, which helps improve the wetting speed of the electrolyte. Preferably, the battery satisfies: 5 ≤ A ≤ 6.5, and 20 ≤ Hm ≤ 40.

In some embodiments, the lithium salt in the electrolyte is selected from at least one of lithium hexafluorophosphate, lithium perchlorate, lithium difluoro(oxalato)borate, lithium bis(fluorosulfonyl)imide, or lithium tetrafluoroborate.

The presence of lithium difluoro(oxalato)borate can achieve the effect of inhibiting high-temperature decomposition of lithium salt and inhibiting gas production, and improve hot-box performance. Moreover, it exhibits a good high-voltage stability and a wide operating temperature range, with low ion migration resistance at -20°C. However, the low solubility of lithium difluoro(oxalato)borate in the electrolyte easily leads to deterioration of the electrolyte wetting effect, hindering the widespread application of lithium difluoro(oxalato)borate in electrolytes. In some embodiments of this application, by providing the protrusions 311 on the electrode plate 300, an appropriate gap is created between the electrode plate 300 and the separator 50, which can improve the wetting effect of the electrolyte into the active material layer, promoting the application of lithium difluoro(oxalato)borate in electrolytes. When the lithium salt includes lithium difluoro(oxalato)borate, and based on the total weight of the electrolyte, a weight percentage of lithium difluoro(oxalato)borate is K (%), where K satisfies: 3.0 ≤ K ≤ 10.0. For example, K may be 3.00%, 3.55%, 3.69%, 5.22%, 6.68%, 8.89%, 10.00%, or in any range defined by two of the above values. By selecting lithium difluoro(oxalato)borate within the above range, the electrolyte can have a good wetting effect. Preferably, the battery satisfies: 3.0 ≤ K ≤ 9.0, and 20 ≤ Hm ≤ 60. Lithium difluoro(oxalato)borate can be fully dissolved in the electrolyte, and the electrolyte has an appropriate wetting effect.

In some embodiments, the electrode plate 300 has multiple second protrusions 302 corresponding to the flat portion 201; and along the thickness direction of the electrode plate 300, a height of the second protrusion 302 is Hn (µm), where Hn satisfies: 5 ≤ Hn ≤ 40. For example, Hn may be 5 µm, 10 µm, 15 µm, 25 µm, 35 µm, 40 µm, or in any range defined by two of the above values. By selecting the height of the second protrusion 302 within the above range, the second protrusion 302 provides good support for the flat portion 201 of the electrode body 20. The height Hm of the first protrusion 301 and the height Hn of the second protrusion 302 satisfy: 1.5 ≤ Hm/Hn ≤ 5, which ensures an appropriate ratio between the height Hm of the first protrusion 301 and the height Hn of the second protrusion 302, providing better support for the flat portion 201 and the corner portion 202 of the electrode body 20, respectively, and improving the electrolyte wetting effect.

In some embodiments, a diameter of an inner surface of the first protrusion 301 is Rm (mm), where Rm satisfies: 0.3 ≤ Rm ≤ 10. For example, Rm may be 0.3 mm, 10 mm, or in any range defined by any values in the range of the above values. By selecting the diameter Rm of the inner surface of the first protrusion 301 to satisfy the range in the above conditional expression, it is convenient to match with the height of the first protrusion 301, so that the first protrusion 301 of the electrode plate 300 has an appropriate elongation rate and an appropriate sharpness. This ensures a good support stability for the first protrusion 301, facilitating formation of a uniform solid electrolyte interphase film at the first protrusion 301. In some embodiments, a diameter of an inner surface of the second protrusion 302 is Rn (mm), where Rm = Rn. Similarly, this facilitates formation of a uniform solid electrolyte interphase film at the second protrusion 302. If the first protrusion 301 or the second protrusion 302 has an irregular shape, an equivalent diameter is used, which is a distance between two farthest points.

In some embodiments of this application, when the electrode plate 300 has the first protrusion 301 and the second protrusion 302, optionally, all the protrusions 311 of a same electrode plate 300 are arranged to protrude towards a same side of the electrode plate 300 in the thickness direction Z of the electrode plate 300. For example, the first protrusion 301 disposed on the flat section 21 and the second protrusion 302 disposed on the corner section 22 both protrude towards a side facing a winding center of the electrode body 20; or the first protrusion 301 disposed on the flat section 21 and the second protrusion 302 disposed on the corner section 22 both protrude towards a side facing away from a winding center of the electrode body 20. Optionally, a part of the protrusions 311 of a same electrode plate 300 protrude towards one side of the electrode plate 300 in the thickness direction Z of the electrode plate 300, and another part of the protrusions 311 protrude towards the other side of the electrode plate 300 in the thickness direction Z of the electrode plate 300. For example, the first protrusion 301 disposed on the flat section 21 protrudes towards the side facing the winding center of the electrode body 20, and the second protrusion 302 disposed on the corner section 22 protrudes towards the side facing away from the winding center of the electrode body 20; or the first protrusion 301 disposed on the flat section 21 protrudes towards the side facing away from the winding center of the electrode body 20, and the second protrusion 302 disposed on the corner section 22 protrudes towards the side facing the winding center of the electrode body 20.

The above is merely an exemplary description. This application does not limit the orientation of the protrusions 311 of each electrode plate 300, which can be specifically selected according to actual needs.

In some embodiments, the active material layer of the electrode plate 300 includes a conductive agent, where the conductive agent includes carbon nanotubes, and a length of the carbon nanotubes is L (µm), where L satisfies: 0.2 ≤ L ≤ 5. By selecting the active material layer also including carbon nanotubes, the high-temperature impedance of the electrode plate 300 can be reduced, and the high-temperature charge-discharge rate performance of the battery can be improved. By selecting the length L of the carbon nanotubes within the above range, the carbon nanotubes with an appropriate length enable the active material layer at the first protrusions 301 and the second protrusions 302 to have a good morphological stability, making it less prone to abnormal conditions such as cracks and shedding. They also improve the electronic conductivity of the electrode plate and enhance 45°C float charging performance of the battery.

In some embodiments, a diameter of the carbon nanotubes is D1 (nm), where D1 satisfies: 5 ≤ D1 ≤ 18. For example, D1 may be 5 nm, 6 nm, 8 nm, 10 nm, 12 nm, 15 nm, 18 nm, or in any range defined by two of the above values. By selecting the diameter D1 of the carbon nanotubes within the above range, the effect of reducing interfacial side reactions in the electrode plate, improving cycling, and improving the hot-box performance of the battery can be achieved.

In some embodiments, a first surface is formed on a surface of the active material layer facing away from the current collector, and the protrusions 311 are disposed in a bump region of the first surface, where the bump region is defined by a bump boundary line. The protrusions 311 in the bump region may be located within an internal region defined by a bump boundary line, or the protrusions 311 may be inscribed in a bump boundary line. The first surface further includes an end clearance region 330 and an edge clearance region 341. The end clearance region 330 is connected to an end of the bump region in the length direction X of the electrode plate 300 and extends to an edge of the electrode plate 300. The edge clearance region 341 is disposed on one side of the bump region in the width direction Y of the electrode plate 300 and extends to an edge of the electrode plate 300. Neither the edge clearance region 341 nor the end clearance region 330 is provided with the protrusions 311. After the two electrode plates 300 and the separator 50 are wound, a surface of the electrode plate 300 corresponding to the edge clearance region 341 and the end clearance region 330 may be spaced apart from the separator 50. The end clearance region 330 includes a head clearance region 331 and a tail clearance region 332. In the electrode body 20, the head clearance region 331 of the electrode plate 300 is located in the innermost layer, and the tail clearance region 332 of the electrode plate 300 is located in the outermost layer.

In some embodiments of this application, the current collector of the negative electrode plate 420 is a negative electrode current collector, and the active material layer is a negative electrode active material layer. The current collector of the positive electrode plate 410 is a positive electrode current collector, and the active material layer is a positive electrode active material layer. The embodiments of this application do not specifically limit the materials for the positive electrode active material, the positive electrode current collector, the negative electrode active material, and the negative electrode current collector. All materials known in the art that can be used as the positive electrode active materials, positive electrode current collectors, negative electrode active materials, and negative electrode current collectors are applicable to this application.

For example, the negative electrode current collector can be made of at least one of copper foil, aluminum foil, nickel foil, or a carbon-based current collector; and a thickness of the negative electrode current collector may be 1 µm to 200 µm. The negative electrode active material layer may be disposed on one surface or two opposite surfaces of the negative electrode current collector. Further, in the thickness direction Z of the negative electrode plate 420, the negative electrode active material layer may be applied onto only a partial region of the negative electrode current collector. For example, the thickness of the negative electrode active material layer may be 10 µm to 500 µm.

For example, the negative electrode active material layer includes a negative electrode active material, and the negative electrode active material includes at least one of lithium metal, natural graphite, artificial graphite, or a silicon-based material. The silicon-based material includes at least one of silicon, silicon oxide, silicon carbide, or silicon alloy. The negative electrode active material layer may further include a conductive agent. For example, in addition to including carbon nanotubes, the conductive agent in the negative electrode active material layer may further include at least one of carbon black, acetylene black, Ketjen black, flaky graphite, graphene, carbon fiber, or carbon nanofibers. The negative electrode active material layer may further include a binder. The binder may include at least one of carboxymethyl cellulose CMC, polyacrylate, polyacrylic ester, polyvinylpyrrolidone, polyaniline, polyimide, polyamide-imide, polysiloxane, epoxy resin, polyester resin, polyurethane resin, or polyfluorene.

For example, the positive electrode current collector may be an aluminum foil. Certainly, other positive electrode current collectors commonly used in the art may also be used. A thickness of the positive electrode current collector may be 1 µm to 200 µm. The positive electrode active material layer may be disposed on one surface or two opposite surfaces of the positive electrode current collector. Further, in the thickness direction Z of the positive electrode plate 410, the positive electrode active material layer may be applied onto only a partial region of the positive electrode current collector, and the thickness of the positive electrode active material layer may be 10 µm to 500 µm.

For example, the positive electrode active material includes LiCoO₂, LiNiO₂, LiMn₂O₄, LiCo_{1-y}M_{y}O₂, LiNi_{1-y}M_{y}O₂, LiMn_{2-y}M_{y}O₄, LiNiₓCo_{y}Mn_{z}M_{1-x-y-z}O₂, where M is selected from at least one of Fe, Co, Ni, Mn, Mg, Cu, Zn, Al, Sn, B, Ga, Cr, Sr, V, or Ti, and 0≤y≤1, 0≤x≤1, 0≤z≤1, and x+y+z≤1. The positive electrode active material layer further includes a conductive agent. For example, in addition to including carbon nanotubes, the conductive agent in the positive electrode active material layer may further include at least one of conductive carbon black, acetylene black, Ketjenblack, flaky graphite, graphene, or carbon fiber. The positive electrode active material layer may further include a binder. The binder may include at least one of a copolymer of vinylidene fluoride-hexafluoropropylene, a styrene-acrylate copolymer, a styrene-butadiene copolymer, polyamide, polyacrylonitrile, polyacrylate, polyacrylate, sodium carboxymethyl cellulose, polyvinyl acetate, polyvinylpyrrolidone, polyvinyl ether, polymethyl methacrylate, polytetrafluoroethylene, or polyhexafluoropropylene.

This application does not specifically limit the separator 50. Various materials known in the art that can be used as the separator 50 are applicable to this application. For example, the separator 50 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high molecular weight polyethylene. Polyethylene and polypropylene, in particular, have a good effect on preventing short circuits and can improve the stability of the electrode assembly through a shutdown effect. The thickness of the separator 50 is in the range of about 3 µm to 500 µm. The positive electrode tab and the negative electrode tab are made of a metal conductive material.

In some embodiments of this application, the battery further includes a positive electrode tab and a negative electrode tab. The positive electrode tab is disposed on the positive electrode plate 410, and the negative electrode tab is disposed on the negative electrode plate 420. The embodiments of this application do not specifically limit the positive electrode tab, the negative electrode tab, and the protective adhesive. Various materials known in the art that can be used as positive electrode tabs, negative electrode tabs, and protective adhesives are applicable to this application.

The electrolyte in some embodiments of this application further includes a non-aqueous organic solvent. The embodiments of this application do not specifically limit the non-aqueous organic solvent. Various materials known in the art that can be used as non-aqueous organic solvents are applicable to this application. For example, the non-aqueous organic solvent may include at least one of a carboxylate compound, an ether compound, or another organic solvent. The carbonate compound may include, but is not limited to, at least one of a chain carbonate compound or a cyclic carbonate compound. The chain carbonate compound may include, but is not limited to, at least one of dipropyl carbonate (DPC) or ethyl methyl carbonate (EMC). The cyclic carbonate compound may include, but is not limited to, at least one of butylene carbonate (BC) or vinylene ethylene carbonate (VEC). The carboxylate compound may include, but is not limited to, at least one of methyl formate, methyl acetate, ethyl acetate, n-propyl acetate, tert-butyl acetate, methyl propionate, ethyl propionate, or propyl propionate. The ether compound may include, but is not limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, trimethyl phosphate, triethyl phosphate, trioctyl phosphate, or phosphate ester. This application does not specifically limit the weight percentage of the non-aqueous organic solvent in the electrolyte, as long as the purpose of this application can be achieved. For example, based on the total mass of the electrolyte, the weight percentage of the non-aqueous organic solvent is 10% to 70%.

This application does not specifically limit the battery packaging bag, which may be any packaging bag known in the art, as long as the purpose of this application can be achieved.

This application does not specifically limit the type of the battery, which may include any apparatus in which electrochemical reactions take place. In this application, the battery may include, but is not limited to: a lithium metal battery, a lithium ion battery, a lithium polymer battery, a lithium ion polymer battery, or the like.

The preparation process of the battery of this application is well known to those skilled in the art, and this application has no special restrictions. For example, the preparation process may include, but is not limited to, the following steps: after installing the positive electrode tab on the positive electrode plate 410 and the negative electrode tab on the negative electrode plate 420, stacking the positive electrode plate 410, the separator 50, and the negative electrode plate 420 in order, performing an operation such as winding or folding on the resulting stack as needed, to obtain a wound electrode assembly; placing the electrode assembly into a packaging bag, injecting the electrolyte into the packaging bag, and sealing it, to obtain a battery; or stacking the positive electrode plate 410, the separator 50, and the negative electrode plate 420 in order, then fixing the four corners of the entire stacked structure with tape to obtain a stacked electrode assembly, placing the electrode assembly into a packaging bag, injecting the electrolyte into the packaging bag, and sealing it, to obtain a battery.

The battery of this application can be used in electric apparatuses. This application does not specifically limit the type of the electric apparatus, which may be any electric apparatus known in the prior art. In some embodiments, the electric apparatus may include, but is not limited to, a laptop computer, a pen-input computer, a mobile computer, an e-book reader, a portable telephone, a portable fax machine, a portable copier, a portable printer, a head-mounted stereo headphone, a video recorder, an LCD television, a portable cleaner, a portable CD player, a mini disc, a transceiver, an electronic notepad, a calculator, a memory card, a portable recorder, a radio, a backup power supply, a motor, an automobile, a motorcycle, an electric bicycle, a bicycle, a lighting fixture, a toy, a game console, a clock, an electric tool, a flashlight, a camera, a large household battery, a lithium-ion capacitor, and the like.

The following further describes this application with reference to the embodiments by using a lithium-ion battery as an example. It should be understood that these examples are merely used to describe this application but not to limit the scope of this application.

The following methods are used to test the performance of lithium-ion batteries in the examples and comparative examples of this application.

### (1) Test method for 1.5C charge/0.5C discharge cycling capacity retention rate at 25°C/45°C

In an environment of 25°C/45°C, the lithium-ion battery is charged at a constant current of 1.5C to the full charge voltage (the designed maximum voltage of the lithium-ion battery is 4.53 V), constant-voltage charged at the maximum voltage until the current is 0.02C, and then discharged at a constant current of 0.5C until the final voltage is 3.0 V, and the discharge capacity at the first cycle is recorded. After that, the above charge-discharge cycle is repeated, and the discharge capacity of the lithium-ion battery for each charge-discharge cycle is recorded.

1.5C charge/0.5C discharge cycling capacity retention rate at 25°C/45°C = (discharge capacity of the N-th cycle/discharge capacity of the first cycle) × 100%.

The number of cycles for a 0.5C cycling capacity at 25°C/45°C of ≤ 80% is: the number of charge-discharge cycles when the cycling capacity retention rate is 80%.

### (2) Test method for height H of the protrusion 311

The electrode plate is measured using a scanning electron microscope (SEM) measurement method. The electrode plate sample is placed in a scanning electron microscope, and a high-resolution image of the bumps is obtained by electron beam scanning. In the SEM image, image processing software can be used to draw a measurement line along the height direction of the bump, and the height of the bump can be calculated based on the pixel information of the image and the known magnification. Similarly, in the SEM image, the diameter of the bump is measured using the image processing software, and the average value of the diameters of three bumps at three adjacent positions is taken to obtain the height H of the protrusion.

The height H can also be measured using a VR-series shape and contour measuring microscope.

### (3) Electrolyte viscosity test method

The electrolyte sample is placed in a beaker, and the electrolyte viscosity is measured at 25°C using a viscometer.

### (4) Test scheme for 1s DCR (Direct Current Resistance, battery direct current resistance) value of fresh battery at 20%SOC

A fully charged battery is left standing for 1 hour, discharged at a current of 0.2C to the target 20%SOC, left standing for 1 minute, and then discharged at 1C for 1 second. During the 1-second current application, the change in battery terminal voltage is recorded. The direct current internal resistance of the battery is calculated using the formula R = ΔV/I, where ΔV is the voltage change over 1 second before and after current application, and I is the applied current.

### (5) Test scheme for 0.2C discharge capacity retention rate at -20°C (%)

Five lithium-ion batteries are taken from each group and charged in a 25°C environment. Each lithium-ion battery is constant-current and constant-voltage charged at a charging current of 1C until the upper limit voltage is reached. Then, the fully charged lithium-ion battery is left standing for 1 hour in 25°C and -20°C environments, respectively, and then constant-current discharged to the cut-off voltage at a discharge current of 0.2C, to obtain the discharge capacity DR at 25°C and the discharge capacity DL at -20°C of the lithium-ion battery, respectively. The upper limit charge voltage of the lithium-ion battery is 4.53 V, and the cut-off discharge voltage is 3 V. $Low - temperature capacity retention rate \left(%\right) = DL / DR \times 100 % .$

A lower low-temperature capacity retention rate indicates a poorer low-temperature charge-discharge performance of the lithium-ion battery. A higher low-temperature capacity retention rate indicates a better low-temperature charge-discharge performance of the lithium-ion battery.

### (6) Test scheme for gas production

The amount of gas released by the battery is measured using a gas analyzer or a gas collection apparatus. The operation method is as follows: ensuring that the equipment has been calibrated to improve the accuracy of the measurement; placing the battery in the test container, and recording the initial gas amount; and performing 800 charge-discharge cycles using the charge-discharge cycling method described in (1) Test method for 1.5C charge/0.5C discharge cycling capacity retention rate at 25°C, and then measuring the gas amount of the battery. $Battery gas production = gas amount after test - initial gas amount .$

### (7) Test scheme for 134°C hot-box pass rate (%, 10 samples tested)

Ten lithium-ion batteries are taken from each group and charged in a 25°C environment. Each lithium-ion battery is constant-current and constant-voltage charged at a charging current of 1C until the upper limit voltage is reached. Then, the fully charged lithium-ion battery is placed in a hot box, and when the hot box temperature reaches 134°C, left standing for 1 hour. The battery voltage and equipment temperature data are recorded during this process. After 1 hour, if the battery does not catch fire, it is determined as passing the test. $Pass rate \left(%\right) = number of batteries passing the test / 10 \times 100 % .$

A higher pass rate means a better hot-box performance of the battery.

### (8) Test scheme for the longest non-gassing time during 45°C float charging

The temperature of the test environment is controlled at 45°C. This temperature can be maintained using a constant temperature chamber or an environmental chamber. The battery is connected to a float charging power supply, ensuring correct connection and good contact. CV is started at 4.53 V, the start time is recorded, and the voltage, current, temperature, and thickness of the battery are monitored daily, to observe whether the battery has abnormal phenomena, such as overheating, leakage, or gassing. $Thickness swelling rate = measured thickness / initial thickness * 100 % - 1 .$

The date when obvious gassing is observed and the thickness swelling rate is greater than 10% is recorded in the unit of days.

### (9) Test scheme for electronic conductivity of electrode plate

A four-probe tester or other suitable conductivity testing equipment is used. The operation method is as follows: The equipment is calibrated to ensure measurement accuracy, and the temperature and humidity of the test environment are ensured at 20°C to 25°C. The sample is placed on the testing equipment, with the probes in good contact with the sample surface. A known current is applied, and the conductivity is calculated by measuring the voltage drop. For the four-probe method, the conductivity can be calculated according to the following formula: σ = I/V * t/W, where σ is the electronic conductivity, I is the current, V is the voltage drop, t is the sample thickness, and W is the sample width.

### (10) Test scheme for K value

After battery production is completed, the open circuit voltage OCV1 of the battery is measured using an open circuit voltage tester. After 48 hours, the open circuit voltage OCV2 of the battery is re-measured. K value = (OCV1 - OCV2) mv/48 h.

The K value can reflect the self-discharge performance of the battery. A larger K value means a faster power loss speed of the battery, that is, the battery power decreases rapidly when in a static state. A smaller K value means a slower power loss speed of the battery and a higher stability of the battery, that is, the battery power decreases slowly when in a static state.

### (11) Electrolyte composition measurement

Testing is performed using GC-MS gas chromatography-mass spectrometry in combination with the internal standard method.

### Example 1-1

### (1) Preparation of the positive electrode plate 410

The positive electrode active material LiCoO₂, positive electrode conductive agent conductive carbon black (Super P), and positive electrode binder polyvinylidene fluoride (PVDF, Mw=7×10⁶) were mixed in a mass ratio of 97.5:1:1.5. N-methylpyrrolidone (NMP) was added as a solvent, and the mixture was well stirred in a vacuum mixer to obtain a positive electrode slurry with a solid content of 75wt%. The positive electrode slurry was evenly applied onto one surface of a 10µm thick positive electrode current collector aluminum foil, followed by drying at 85°C and cold pressing, to obtain a positive electrode plate 410 coated with a 50µm thick positive electrode active material layer on one side. Subsequently, the above steps were repeated on the other surface of the aluminum foil to obtain a positive electrode plate 410 coated with the positive electrode active material layer on both sides. Then, the positive electrode plate 410 was cut into 74 mm × 851 mm for use, where the compacted density of the positive electrode active material layer was 4.23 g/cm³.

### (2) Preparation of the negative electrode plate 420

The artificial graphite as the negative electrode active material, conductive carbon black (Super P) as the negative conductive agent, carboxymethyl cellulose (CMC-Na, Mw=7×10⁵) as the thickener, and styrene-butadiene rubber (SBR, Mw=5×10⁶) as the negative binder were mixed at a mass ratio of 97.5:1:0.5:1. Then, deionized water was added as a solvent, and the mixture was well stirred in a vacuum mixer to obtain a negative electrode slurry with a solid content of 50wt%. The negative electrode slurry was evenly applied onto one surface of an 8µm thick negative electrode current collector copper foil, followed by drying at 85°C and cold pressing, to obtain a negative electrode plate 420 coated with a 60µm thick negative electrode active material layer on one side. Subsequently, the above steps were repeated on the other surface of the copper foil to obtain a negative electrode plate 420 coated with the negative electrode active material layer on both sides. Then, the negative electrode plate 420 was cut into 76 mm × 867 mm was cut for use, where the compacted density of the negative electrode active material layer was 1.77 g/cm³.

### (3) Preparation of the separator 50

A polyethylene (PE) porous membrane with a thickness of 5 µm was used.

### (4) Preparation of electrolyte

In an argon atmosphere glove box with a water content of less than 10 ppm, ethylene carbonate (EC), propylene carbonate (PC), and diethyl carbonate (DEC) were mixed at a mass ratio of 1:1:2 to obtain a base solvent. Then, lithium hexafluorophosphate (LiPF₆), lithium difluorophosphate, and ethylene glycol bis(2-cyanoethyl) ether were dissolved in the base solvent to obtain the electrolyte.

Based on the total mass of the electrolyte, the weight percentage K of LiPF₆ was 8.0%, the weight percentage E of lithium difluorophosphate was 0.01%, the weight percentage F of ethylene glycol bis(2-cyanoethyl) ether was 0.1%, and the viscosity A of the electrolyte was 5.5 mPa.s.

### (5) Assembly of lithium-ion battery

The positive aluminum electrode tab was installed on the edge clearance region 341 of the positive electrode plate 410 by rolling, and protective adhesive was applied to the edge region of the positive electrode plate 410. The negative nickel electrode tab was installed on the edge clearance region 341 of the negative electrode plate 420 by rolling.

The positive electrode plate 410 with the positive electrode tab installed, the separator 50, and the negative electrode plate 420 with the negative electrode tab installed were stacked in order, with the separator 50 located between the positive electrode plate 410 and the negative electrode plate 420 to provide separation. The resulting stack was wound to obtain the electrode body 20. The electrode assembly was placed in an outer package aluminum-plastic film, and dried in an 85°C vacuum oven for 12 hours to remove moisture. Then the electrolyte was injected, and processes such as vacuum sealing, standing, formation (charged to 3.5 V at a constant current of 0.2C, and then charged to 3.9 V at a constant current of 1C), capacity testing, degassing, and trimming were performed to obtain a lithium-ion battery.

In Example 1-1, the negative electrode plate 420 had a first protrusion 301 and a second protrusion 302. The protrusions 311 were formed on the negative electrode plate 420 by rolling, and the electrode plate 300 shown in FIG. 4 was used as the negative electrode plate 420.

**Examples 1-2 to 1-15 and Comparative Examples 1-1 to 1-6** are the same as Example 1-1, except that the height Hm of the first protrusion 301 is adjusted according to Table 1 in Preparation of the negative electrode plate 420, and the weight percentage E of lithium difluorophosphate is adjusted according to Table 1 in Preparation of electrolyte. The electrolyte of Comparative Example 1-6 does not contain lithium difluorophosphate.

The parameters of the lithium-ion batteries and the performance test results of the lithium-ion batteries in Examples 1-1 to 1-15 and Comparative Examples 1-1 to 1-6 are shown in Table 1.

**Table 1**

| | Height Hm of first protrusion (µm) | Inner surface radius Rm of first protrusion (mm) | Height of second protrusion Hn (µm) | Inner surface radius Rn of second protrusion (mm) | Hm/Hn | E (%) | Number of cycles for 1.5C charge/0.5C discharge cycling capacity ≤ 80% at 25°C | Number of cycles for 1.5C charge/0.5C discharge cycling capacity ≤ 80% at 45°C | 1s DCR value of fresh battery at 20%SOC (mΩ) |
|---|---|---|---|---|---|---|---|---|---|
| Example 1-1 | 20 | 2.2 | 20 | 2.2 | 1.0 | 0.01 | 1620 | 886 | 30.2 |
| Example 1-2 | 30 | 2.2 | 20 | 2.2 | 1.5 | 0.01 | 1618 | 892 | 30.4 |
| Example 1-3 | 40 | 2.2 | 20 | 2.2 | 2.0 | 0.01 | 1616 | 890 | 30.1 |
| Example 1-4 | 50 | 2.2 | 20 | 2.2 | 2.5 | 0.01 | 1460 | 802 | 36.8 |
| Example 1-5 | 60 | 2.2 | 20 | 2.2 | 3 | 0.01 | 1458 | 793 | 38.2 |
| Example 1-6 | 80 | 2.2 | 20 | 2.2 | 4 | 0.01 | 1438 | 786 | 40.3 |
| Example 1-7 | 40 | 2.2 | 20 | 2.2 | 2 | *0.05* | 1615 | 895 | 30.4 |
| Example 1-8 | 40 | 2.2 | 20 | 2.2 | 2 | 0.10 | 1618 | 892 | 30.2 |
| Example 1-9 | 40 | 2.2 | 20 | 2.2 | 2 | 0.50 | 1617 | 889 | 30.1 |
| Example 1-10 | 40 | 2.2 | 20 | 2.2 | 2 | 1.00 | 1632 | 893 | 30.0 |
| Example 1-11 | 40 | 2.2 | 20 | 2.2 | 2 | 1.50 | 1626 | 896 | 29.8 |
| Example 1-12 | 40 | 2.2 | 20 | 2.2 | 2 | 1.80 | 1623 | 901 | 30.8 |
| Example 1-13 | 40 | 2.2 | 20 | 2.2 | 2 | 2.00 | 1442 | 785 | 39.4 |
| Example 1-14 | 40 | 2.2 | 20 | 2.2 | 2 | 2.50 | 1455 | 796 | 37.6 |
| Example 1-15 | 40 | 2.2 | 20 | 2.2 | 2 | 3.00 | 1462 | 784 | 38.0 |
| Comparative Example 1-1 | 10 | 2.2 | 20 | 2.2 | 0.5 | 0.01 | 966 | 486 | 130.3 |
| Comparative Example 1-2 | 90 | 2.2 | 20 | 2.2 | 4.5 | 0.01 | 935 | 522 | 126.4 |
| Comparative Example 1-3 | 50 | 2.2 | 20 | 2.2 | 2.5 | 4.00 | 896 | 510 | 126.6 |
| Comparative Example 1-4 | 10 | 2.2 | 20 | 2.2 | 0.5 | 4.00 | 810 | 436 | 132.4 |
| Comparative Example 1-5 | 90 | 2.2 | 20 | 2.2 | 4.5 | 5.00 | 815 | 443 | 130.8 |
| Comparative Example 1-6 | 40 | 2.2 | 20 | 2.2 | 2 | / | 767 | 398 | 135.9 |

A larger number of charge-discharge cycles and a smaller 1s DCR value of the battery at 20%SOC indicate a better performance of the battery.

From Examples 1-1 to 1-15 and Comparative Examples 1-1 to 1-6 in Table 1, it can be seen that by selecting the height Hm of the first protrusion of the electrode plate to satisfy 20 ≤ Hm ≤ 80, and selecting the weight percentage E of lithium difluorophosphate in the electrolyte to satisfy 0.01 ≤ E ≤ 3.00, lithium difluorophosphate can improve the ion mobility in the lithium salt, and reduce interfacial side reactions, thereby improving the charge-discharge cycling performance of the battery, and reducing the 1s direct current impedance of the battery at 20%SOC. When Hm is less than 20 µm or greater than 80 µm, the combined use of lithium difluorophosphate and the first protrusion 301 has limited improvement effect on the fast charging performance of the battery. When the weight percentage E of lithium difluorophosphate is greater than 3.00%, high electrolyte viscosity and lithium ion enrichment at the interface of the electrode plate 300 also occur.

It can be seen that when Hm satisfies 20 ≤ Hm ≤ 40 in Examples 1-1 to 1-6, and E satisfies 0.01 ≤ E ≤ 3.00 in Examples 1-7 to 1-15, the electrolyte has a more appropriate viscosity and ion transport capability. This not only better improves the electrolyte wetting effect, thereby improving the charge-discharge cycling performance of the lithium-ion battery, but also further reduces the 1s DCR value of the lithium-ion battery at 20%SOC.

**Examples 2-1 to 2-18** are the same as Example 1-3, except that the height Hm of the first protrusion 301 is adjusted according to Table 2 in Preparation of the negative electrode plate 420, and the weight percentage F of ethylene glycol bis(2-cyanoethyl) ether is adjusted according to Table 2 in Preparation of electrolyte.

The parameters of the lithium-ion batteries and the performance test results of the lithium-ion batteries in Examples 2-1 to 2-18 are shown in Table 2.

**Table 2**

| | Height Hm of first protrusion (µm) | Inner surface radius Rm of first protrusio n (mm) | Height Hn of second protrusion (µm) | Inner surface radius Rn of second protrusion (mm) | Hm/ Hn | F (%) | Number of cycles for 1.5C charge/0.5C discharge cycling capacity ≤ 80% at 25°C | Number of cycles for1.5C charge/0.5C discharge cycling capacity ≤ 80% at 45°C | 0.2C discharge capacity retention rate at - 20°C (%) | Gas production (µL) |
|---|---|---|---|---|---|---|---|---|---|---|
| Example 1-3 | 40 | 2.2 | 20 | 2.2 | 2.0 | 0.3 | 1616 | 890 | 72.5 | 900 |
| Example 2-1 | 40 | 2.2 | 20 | 2.2 | 2.0 | 0.1 | 1468 | 836 | 68.4 | 1800 |
| Example 2-2 | 40 | 2.2 | 20 | 2.2 | 2.0 | 0.2 | 1452 | 789 | 66.0 | 1800 |
| Example 2-3 | 40 | 2.2 | 20 | 2.2 | 2.0 | 0.3 | 1622 | 889 | 72.6 | 900 |
| Example 2-4 | 40 | 2.2 | 20 | 2.2 | 2.0 | 0.5 | 1613 | 890 | 72.3 | 800 |
| Example 2-5 | 40 | 2.2 | 20 | 2.2 | 2.0 | 1.0 | 1622 | 894 | 73.1 | 800 |
| Example 2-6 | 40 | 2.2 | 20 | 2.2 | 2.0 | 1.2 | 1621 | 901 | 72.7 | 800 |
| Example 2-7 | 40 | 2.2 | 20 | 2.2 | 2.0 | 1.5 | 1450 | 802 | 66.5 | 1800 |
| Example 2-8 | 40 | 2.2 | 20 | 2.2 | 2.0 | 1.8 | 1453 | 800 | 66.0 | 1900 |
| Example 2-9 | 40 | 2.2 | 20 | 2.2 | 2.0 | 2.0 | 1423 | 789 | 65.2 | 2000 |
| Example 2-10 | 40 | 2.2 | 20 | 2.2 | 2.0 | 2.5 | 1434 | 790 | 64.5 | 1950 |
| Example 2-11 | 50 | 2.2 | 20 | 2.2 | 2.5 | 0.1 | 1616 | 890 | 72.5 | 900 |
| Example 2-12 | 50 | 2.2 | 20 | 2.2 | 2.5 | 0.2 | 1620 | 892 | 73.0 | 800 |
| Example 2-13 | 50 | 2.2 | 20 | 2.2 | 2.5 | 1.5 | 1618 | 890 | 72.8 | 900 |
| Example 2-14 | 50 | 2.2 | 20 | 2.2 | 2.5 | 1.8 | 1618 | 885 | 72.6 | 900 |
| Example 2-15 | 50 | 2.2 | 20 | 2.2 | 2.5 | 2.0 | 1614 | 903 | 71.0 | 940 |
| Example 2-16 | 70 | 2.2 | 20 | 2.2 | 3.5 | 2.5 | 1632 | 889 | 71.4 | 920 |
| Example 2-17 | 40 | 2.2 | 20 | 2.2 | 2.0 | 0.01 | 1427 | 790 | 66.2 | 1900 |
| Example 2-18 | 40 | 2.2 | 20 | 2.2 | 2.0 | 3.0 | 1430 | 792 | 65.9 | 2000 |

From Examples 2-1 to 2-14 and Example 1-3 in Table 2, it can be seen that by selecting the weight percentage F of ethylene glycol bis(2-cyanoethyl) ether to satisfy 0.1 ≤ F ≤ 1.8, and selecting the height Hm of the first protrusion 301 to satisfy 20 ≤ Hm ≤ 80, with Hm matching F, while the first protrusion 301 of the corner portion 202 can have a higher height, ethylene glycol bis(2-cyanoethyl) ether can effectively improve the stability of the solid electrolyte interphase film, improve the low-temperature high-rate discharge performance and intermittent cycling performance of the battery, and reduce the gas production during long cycles of the battery.

It can be seen that when F satisfies 0.1 ≤ F ≤ 1.8 in Examples 2-1 to 2-8, and Hm satisfies 20 ≤ Hm ≤ 60 in Examples 2-9 to 2-14, ethylene glycol bis(2-cyanoethyl) ether can better alleviate the problem of uneven solid electrolyte interphase films caused by the presence of the protrusions 311, and assist lithium difluorophosphate in forming a more stable solid electrolyte interphase film at the interface of the positive electrode plate 410, thereby improving the low-temperature high-rate discharge performance and charge-discharge cycling performance of the battery.

**Examples 3-1 to 3-13** are the same as Example 1-3, except that the height Hm of the first protrusion 301 is adjusted according to Table 3 in Preparation of the negative electrode plate 420, and the viscosity A of the electrolyte is adjusted according to Table 3 in Preparation of electrolyte.

The parameters of the lithium-ion batteries and the performance test results of the lithium-ion batteries in Examples 3-1 to 3-13 are shown in Table 3.

**Table 3**

| | Height Hm of first protrusion (µm) | Inner surface radius Rm of first protrusion (mm) | Height Hn of second protrusion (µm) | Inner surface radius Rn of second protrusion (mm) | Hm/ Hn | A (mpa.s) | Number of cycles for 1.5C charge/0.5C discharge cycling capacity ≤ 80% at 25°C | Number of cycles for 1.5C charge/0.5C discharge cycling capacity ≤ 80% at 45°C | 134°C hot-box pass rate (%, 10ea tested) | 0.2C discharge capacity retention rate at - 20°C (%) |
|---|---|---|---|---|---|---|---|---|---|---|
| Example 1-3 | 40 | 2.2 | 20 | 2.2 | 2.0 | 5.0 | 1616 | 890 | 90 | 73.2 |
| Example 3-1 | 50 | 2.2 | 20 | 2.2 | 2.5 | 4.0 | 1622 | 898 | 90 | 73.2 |
| Example 3-2 | 50 | 2.2 | 20 | 2.2 | 2.5 | 4.5 | 1620 | 899 | 90 | 73.0 |
| Example 3-3 | 50 | 2.2 | 20 | 2.2 | 2.5 | 5.0 | 1443 | 784 | 60 | 67.4 |
| Example 3-4 | 50 | 2.2 | 20 | 2.2 | 2.5 | 5.5 | 1440 | 780 | 60 | 67.0 |
| Example 3-5 | 50 | 2.2 | 20 | 2.2 | 2.5 | 6.0 | 1423 | 775 | 50 | 66.8 |
| Example 3-6 | 50 | 2.2 | 20 | 2.2 | 2.5 | 6.5 | 1463 | 786 | 60 | 67.8 |
| Example 3-7 | 50 | 2.2 | 20 | 2.2 | 2.5 | 7.0 | 1621 | 896 | 80 | 72.3 |
| Example 3-8 | 40 | 2.2 | 20 | 2.2 | 2.0 | 5.0 | 1610 | 902 | 90 | 72.6 |
| Example 3-9 | 40 | 2.2 | 20 | 2.2 | 2.0 | 5.5 | 1618 | 900 | 90 | 72.5 |
| Example 3-10 | 40 | 2.2 | 20 | 2.2 | 2.0 | 6.0 | 1615 | 890 | 90 | 72.6 |
| Example 3-11 | 40 | 2.2 | 20 | 2.2 | 2.0 | 6.5 | 1620 | 899 | 90 | 72.3 |
| Example 3-12 | 50 | 2.2 | 20 | 2.2 | 2.5 | 3.0 | 1444 | 790 | 60 | 67.2 |
| Example 3-13 | 50 | 2.2 | 20 | 2.2 | 2.5 | 8.0 | 1440 | 782 | 50 | 66.1 |

From Examples 3-1 to 3-13 and Example 1-3 in Table 3, it can be seen that by selecting the viscosity A of the electrolyte to satisfy 4.0 ≤ A ≤ 7.0, and the height Hm of the first protrusion to satisfy 20 ≤ Hm ≤ 80, by matching the viscosity A of the electrolyte with the height Hm of the first protrusion 301, an appropriate spacing is maintained between the electrode plate 300 and the separator 50, which helps improve the wetting speed of the electrolyte, and facilitates selection of the content of lithium difluorophosphate within an appropriate range, thereby enabling lithium difluorophosphate to form a solid electrolyte interphase film of an appropriate thickness at the interface of the positive electrode plate 410. This can effectively improve the low-temperature high-rate discharge performance and charge-discharge cycling performance of the lithium-ion battery, and improve the high-temperature hot-box test pass rate of the battery.

From Examples 3-1 to 3-7 and Example 1-3, it can be seen that by further selecting the viscosity A of the electrolyte to satisfy 5.0 ≤ A ≤ 6.5, and the height Hm of the first protrusion to satisfy 20 ≤ Hm ≤ 40, various performances of the lithium-ion battery can be further improved.

**Examples 4-1 to 4-13** are the same as Example 3-1, except that the height Hm of the first protrusion 301 is adjusted according to Table 4 in Preparation of the negative electrode plate 420, and the type of the lithium salt or the weight percentage K of lithium difluoro(oxalato)borate is adjusted according to Table 4 in Preparation of electrolyte.

The parameters of the lithium-ion batteries and the performance test results of the lithium-ion batteries in Examples 4-1 to 4-13 are shown in Table 4.

**Table 4**

| | Height Hm of first protrusion (µm) | Type of K | K (%) | Number of cycles for 1.5C charge/0.5C discharge cycling capacity ≤ 80% at 25°C | Number of cycles for 1.5C charge/0.5C discharge cycling capacity ≤ 80% at 45°C | 134°C hot-box pass rate (%, 10ea tested) | 0.2C discharge capacity retention rate at - 20°C (%) |
|---|---|---|---|---|---|---|---|
| Example 3-1 | 50 | Lithium hexafluorophosp hate | 8 | 1622 | 898 | 90 | 73.2 |
| Example 4-1 | 50 | Lithium perchlorate | 8 | 1620 | 894 | 90 | 72.6 |
| Example 4-2 | 50 | Lithium bis(fluorosulfon yl)imide | 8 | 1622 | 899 | 90 | 73 |
| Example 4-3 | 50 | Lithium tetrafluoroborate | 8 | 1621 | 902 | 90 | 72.8 |
| Example 4-4 | 50 | Lithium difluoro(oxalato )borate | 8 | 1620 | 903 | 100 | 75.3 |
| Example 4-5 | 50 | Lithium difluoro(oxalato )borate | 3 | 1621 | 900 | 100 | 75.2 |
| Example 4-6 | 50 | Lithium difluoro(oxalato )borate | 5 | 1618 | 896 | 100 | 75.4 |
| Example 4-7 | 50 | Lithium difluoro(oxalato )borate | 8 | 1632 | 895 | 100 | 75 |
| Example 4-8 | 50 | Lithium difluoro(oxalato )borate | 10 | 1445 | 783 | 80 | 72.4 |
| Example 4-9 | 70 | Lithium difluoro(oxalato )borate | 10 | 1624 | 903 | 100 | 72.5 |
| Example 4-10 | 50 | Lithium difluoro(oxalato )borate | 14 | 1432 | 793 | 70 | 70.1 |
| Example 4-11 | 50 | Lithium difluoro(oxalato )borate | 1 | 1405 | 782 | 65 | 69.3 |

From Examples 4-1 to 4-4 and Example 3-1 in Table 4, it can be seen that when the lithium salt in the electrolyte is selected from lithium hexafluorophosphate, lithium perchlorate, lithium difluoro(oxalato)borate, lithium bis(fluorosulfonyl)imide, or lithium tetrafluoroborate, the low-temperature high-rate discharge performance, charge-discharge cycling performance, and high-temperature hot-box test pass rate of the lithium-ion battery are all good.

From Examples 4-4 to 4-13 in Table 4, it can be seen that when the electrolyte includes lithium difluoro(oxalato)borate, and the weight percentage K of lithium difluoro(oxalato)borate satisfies 3.0 ≤ K ≤ 10.0, lithium difluoro(oxalato)borate can be dissolved in the electrolyte. In conjunction with the height Hm of the first protrusion satisfying 20 ≤ Hm ≤ 80, an appropriate gap is maintained between the electrode plate 300 and the separator 50, which can improve the wetting effect of the electrolyte into the active material layer, and enable lithium difluoro(oxalato)borate to be applied in the electrolyte, thereby achieving the effect of improving the hot-box performance of the lithium-ion battery, and improving the low-temperature high-rate discharge performance of the lithium-ion battery.

**Examples 5-1 to 5-10** are the same as Example 3-1, except that carbon nanotubes are used instead of conductive carbon black and the length L and diameter D1 of the carbon nanotubes are adjusted according to Table 5 in Preparation of the negative electrode plate 420.

The parameters of the lithium-ion batteries and the performance test results of the lithium-ion batteries in Examples 5-1 to 5-10 are shown in Table 5.

**Table 5**

| | Height Hm of first protrusion (µm) | Height Hn of second protrusion (µm) | Hm/ Hn | Inner surface radius Rm of first protrusion (mm) | Inner surface radius Rn of second protrusion (mm) | Length L of carbon nanotubes (µm) | Diameter D1 of carbon nanotube s (nm) | Number of cycles for 1.5C charge/0.5C discharge cycling capacity ≤ 80% at 25°C | Electroni c conductiv ity of electrode plate (S/cm) | K value | 134°C hot-box pass rate (%, 10ea tested) | Longest non-gassing time during 45°C float charging (days) |
|---|---|---|---|---|---|---|---|---|---|---|---|---|
| Example 3-1 | 50 | 20 | 2.5 | 2.2 | 2.2 | 4 | 5 | 1622 | 0.041 | 0.026 | 90 | 74 |
| Example 5-1 | 50 | 10 | 5.0 | 2.2 | 2.2 | 4 | 5 | 1620 | 0.040 | 0.027 | 90 | 75 |
| Example 5-1' | 50 | 5 | 10.0 | 2.2 | 2.2 | 4 | 5 | 1454 | 0.035 | 0.048 | 60 | 66 |
| Example 5-2 | 50 | 20 | 2.5 | 2.2 | 2.2 | 4 | 5 | 1615 | 0.041 | 0.026 | 90 | 74 |
| Example 5-3 | 50 | 40 | 1.25 | 2.2 | 2.2 | 4 | 5 | 1598 | 0.038 | 0.029 | 90 | 73 |
| Example 5-4 | 50 | 50 | 1.0 | 2.2 | 2.2 | 4 | 5 | 1428 | 0.030 | 0.052 | 50 | 60 |
| Example 5-5 | 50 | 1 | 50 | 2.2 | 2.2 | 4 | 5 | 1398 | 0.030 | 0.054 | 50 | 62 |
| Example 5-6 | 50 | 20 | 2.5 | 0.3 | 2.2 | 4 | 5 | 1621 | 0.040 | 0.025 | 90 | 76 |
| Example 5-7 | 50 | 20 | 2.5 | 1.0 | 2.2 | 4 | 5 | 1612 | 0.042 | 0.026 | 90 | 74 |
| Example 5-8 | 50 | 20 | 2.5 | 3.0 | 2.2 | 4 | 5 | 1623 | 0.041 | 0.025 | 90 | 75 |
| Example 5-9 | 50 | 20 | 2.5 | 6.0 | 2.2 | 4 | 5 | 1610 | 0.040 | 0.028 | 90 | 76 |
| Example 5-10 | 50 | 20 | 2.5 | 10.0 | 2.2 | 4 | 5 | 1618 | 0.041 | 0.026 | 90 | 74 |
| Example 5-11 | 50 | 20 | 2.5 | 12.0 | 2.2 | 4 | 5 | 1388 | 0.020 | 0.050 | 60 | 58 |
| Example 5-12 | 50 | 20 | 2.5 | 2.2 | 2.2 | 0.2 | 5 | 1615 | 0.040 | 0.024 | 90 | 76 |
| Example 5-13 | 50 | 20 | 2.5 | 2.2 | 2.2 | 0.8 | 5 | 1614 | 0.042 | 0.025 | 80 | 77 |
| Example 5-14 | 50 | 20 | 2.5 | 2.2 | 2.2 | 1 | 5 | 1610 | 0.040 | 0.026 | 90 | 74 |
| Example 5-15 | 50 | 20 | 2.5 | 2.2 | 2.2 | 3 | 5 | 1622 | 0.041 | 0.026 | 90 | 73 |
| Example 5-16 | 50 | 20 | 2.5 | 2.2 | 2.2 | 5 | 5 | 1620 | 0.043 | 0.027 | 90 | 75 |
| Example 5-17 | 50 | 20 | 2.5 | 2.2 | 2.2 | 6 | 5 | 1350 | 0.018 | 0.057 | 70 | 61 |
| Example 5-18 | 50 | 20 | 2.5 | 2.2 | 2.2 | 4 | 5 | 1610 | 0.040 | 0.024 | 90 | 75 |
| Example 5-19 | 50 | 20 | 2.5 | 2.2 | 2.2 | 4 | 7 | 1613 | 0.042 | 0.027 | 80 | 76 |
| Example 5-20 | 50 | 20 | 2.5 | 2.2 | 2.2 | 4 | 10 | 1620 | 0.043 | 0.025 | 90 | 73 |
| Example 5-21 | 50 | 20 | 2.5 | 2.2 | 2.2 | 4 | 13 | 1615 | 0.044 | 0.023 | 90 | 75 |
| Example 5-22 | 50 | 20 | 2.5 | 2.2 | 2.2 | 4 | 16 | 1618 | 0.040 | 0.028 | 90 | 74 |
| Example 5-23 | 50 | 20 | 2.5 | 2.2 | 2.2 | 4 | 18 | 1622 | 0.041 | 0.027 | 80 | 72 |
| Example 5-24 | 50 | 20 | 2.5 | 2.2 | 2.2 | 4 | 20 | 1418 | 0.018 | 0.049 | 60 | 60 |
| Example 5-25 | 50 | 20 | 2.5 | 2.2 | 2.2 | 4 | 3 | 1422 | 0.021 | 0.053 | 60 | 59 |

From Examples 5-1 to 5-5 and Example 3-1 in Table 5, it can be seen that when the height Hn of the second protrusion 302 satisfies 5 ≤ Hn ≤ 40, and 1.5 ≤ Hm/Hn ≤ 5, the ratio between the height Hm of the first protrusion 301 and the height Hn of the second protrusion 302 is appropriate, providing better support for the flat portion 201 and the corner portion 202 of the electrode body 20, respectively, and improving the electrolyte wetting effect. This facilitates formation of a uniform solid electrolyte interphase film at the first protrusions 301, thereby improving various performances of the lithium-ion battery.

From Examples 5-6 to 5-11 in Table 5, it can be seen that by selecting the diameter Rm of the inner surface of the first protrusion 301 to satisfy 0.3 ≤ Rm ≤ 10, it is convenient to match with the height Hm of the first protrusion 301, so that the first protrusion 301 of the electrode plate 300 has an appropriate elongation rate and an appropriate sharpness. This ensures a good support stability for the first protrusion 301, facilitating formation of a uniform solid electrolyte interphase film at the first protrusion 301, thereby improving various performances of the lithium-ion battery.

From Examples 5-12 to 5-17 in Table 5, it can be seen that by selecting the length L of the carbon nanotubes to satisfy 0.2 ≤ L ≤ 5, the carbon nanotubes with an appropriate length enable the active material layer at the first protrusion 301 and the second protrusions 302 to have a good morphological stability, making it less prone to abnormal conditions such as cracks and shedding. They also improve the electronic conductivity of the electrode plate and enhance the 45°C float charging performance of the lithium-ion battery.

From Examples 5-18 to 5-25 in Table 5, it can be seen that by selecting the diameter D1 of the carbon nanotubes to satisfy 5 ≤ D1 ≤ 18, interfacial side reactions in the electrode plate can be reduced, achieving the effect of improving the charge-discharge cycling performance of the lithium-ion battery and improving the hot-box performance of the battery.

In the accompanying drawings of this embodiment, the same or similar reference signs correspond to the same or similar components. In the description of this application, it should be understood that the terms "upper", "lower", "left", "right", and the like, indicating orientation or positional relationships are based on the orientation or positional relationships shown in the drawings, and are only for convenience of describing this application and simplifying the description, and do not indicate or imply that the apparatus or component mentioned must have a specific orientation, or be constructed and operated in a specific orientation. Therefore, the terms describing the positional relationships in the drawings are only for illustrative purposes and should not be understood as limiting this application. For those skilled in the art, the specific meanings of such terms can be understood according to specific circumstances.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. A battery, comprising an outer package, an electrode assembly, and an electrolyte solution; wherein the electrode assembly and the electrolyte solution are disposed in an internal space of the outer package;
the electrode assembly comprises a separator and multiple electrode plates, the separator is disposed between two electrode plates of opposite polarities, and the electrode plates and the separator are wound for multiple turns to form an electrode assembly body, the electrode assembly body comprises a flat portion and corner portions disposed at two opposite ends of the flat portion, wherein in the corner portions, at least one of the electrode plates is provided with multiple first protrusions; and along a thickness direction of the at least one of the electrode plates, a height of the first protrusions is Hm (µm), wherein 20 ≤ Hm ≤ 80; and
the electrolyte solution comprises lithium difluorophosphate, and based on a total weight of the electrolyte solution, a weight percentage of the lithium difluorophosphate is E (%), wherein 0.01 ≤ E ≤ 3.00.

2. The battery according to claim 1, **characterized in that**: 0.01 ≤ E ≤ 1.8, and 20 ≤ Hm ≤ 40.

3. The battery according to claim 1, **characterized in that** the electrolyte solution further comprises ethylene glycol bis(2-cyanoethyl) ether, and based on the total weight of the electrolyte solution, a weight percentage of the ethylene glycol bis(2-cyanoethyl) ether is F (%), wherein 0.1 ≤ F ≤ 2.5.

4. The battery according to claim 3, **characterized in that** 0.1 ≤ F ≤ 1.8, and 20 ≤ Hm ≤ 60.

5. The battery according to claim 4, **characterized in that** 0.3 ≤ F ≤ 1.2, and 20 ≤ Hm ≤ 40.

6. The battery according to claim 1, **characterized in that** a viscosity of the electrolyte solution is A (mPa.s), and 4.0 ≤ A ≤ 7.0.

7. The battery according to claim 1, **characterized in that** 5 ≤ A ≤ 6.5, and 20 ≤ Hm ≤ 40.

8. The battery according to claim 1, **characterized in that** the electrolyte solution further comprises a lithium salt, wherein the lithium salt is at least one selected from lithium hexafluorophosphate, lithium perchlorate, lithium difluoro(oxalato)borate, lithium bis(fluorosulfonyl)imide, or lithium tetrafluoroborate.

9. The battery according to claim 1, **characterized in that** the electrolyte solution further comprises a lithium salt; wherein the lithium salt comprises lithium difluoro(oxalato)borate; and based on the total weight of the electrolyte solution, a weight percentage of the lithium difluoro(oxalato)borate is K (%), wherein 3.0 ≤ K ≤ 10.0.

10. The battery according to claim 9, **characterized in that** 3.0 ≤ K ≤ 8.0, and 20 ≤ Hm ≤ 60.

11. The battery according to any one of claims 1 to 10, **characterized in that**, in the flat portion, the at least one of the electrode plates has multiple second protrusions; along the thickness direction of the at least one of the electrode plates, a height of the second protrusion is Hn (µm); a diameter of an inner surface of the first protrusion is Rm (mm), and a diameter of an inner surface of the second protrusion is Rn (mm); and the battery satisfies at least one of the following conditions:
(1) $5 \leq Hn \leq 40 ;$
(2) $1.25 \leq Hm / Hn \leq 5 ;$
(3) $0.3 \leq Rm \leq 10 ; or$
(4) $Rm = Rn .$

12. The battery according to any one of claims 1 to 11, **characterized in that** the at least one of the electrode plates comprises a current collector and an active material layer disposed on a surface of the current collector, wherein the active material layer comprises carbon nanotubes, and an average length of the carbon nanotubes is L (µm), wherein 0.2 ≤ L ≤ 5.

13. The battery according to claim 12, **characterized in that** an average diameter of the carbon nanotubes is D1 (nm), wherein 5 ≤ D1 ≤ 18.

14. The battery according to claim 1, wherein the at least one of the electrode plates provided with the multiple protrusions is a positive electrode plate.15. An electric apparatus, **characterized by** comprising:
a housing; and

15. The battery according to any one of claims 1 to 14, wherein the battery is disposed in an internal space of the housing.
